# EUROPEAN PATENT APPLICATION

(11) **EP 4 280 491 A1**
(43) Date of publication of application: **22.11.2023**
(21) Application number: 22739145.5
(22) Date of filing: 14.01.2022
(51) Int. Cl.: H04L 1/00, H04W 72/04

(54) **DATA TRANSMISSION METHOD AND APPARATUS, AND UE**

(30) Priority: 15.01.2021 CN 202110055722
(71) Applicant: Vivo Mobile Communication Co., Ltd., Dongguan, Guangdong 523863 (CN)
(72) Inventor: JIANG, Lei, Dongguan, Guangdong 523863 (CN); LU, Zhi, Dongguan, Guangdong 523863 (CN); LI, Na, Dongguan, Guangdong 523863 (CN)
(74) Representative: Conti, Marco
(86) International application number: PCT/CN2022/072139
(87) International publication number: WO 2022/152270

(57) **Abstract**

This application discloses a data transmission method and apparatus, and UE, and pertains to the field of communications technologies, so as to resolve the problem that the UE cannot determine how to perform repetition transmission because repetition transmission is configured to be performed within the idle period of the FFP. The method includes: in a case that a time-domain resource of first data overlaps with a first idle period, transmitting, by UE, first data according to a first transmission rule; where the first data is data for repetition transmission, the first idle period is an idle period of a first FFP, and the first FFP is an FFP used by the UE.

## Description

### CROSS-REFERENCE TO RELATED APPLICATIONS

This application claims priority to Chinese Patent Application No. 202110055722.7, filed in China on January 15, 2021, which is incorporated herein by reference in its entirety.

### TECHNICAL FIELD

This application pertains to the field of communications technologies, and specifically relates to a data transmission method and apparatus, and UE.

### BACKGROUND

Sending/receiving timing for frame based equipments (Frame Based Equipment, FBE) usually uses a periodic structure, with the period being a fixed frame period (Fixed Frame Period, FFP).

In ultra-reliable and low latency communications (Ultra-Reliable and Low Latency Communications, URLLC), base stations and user equipments (User Equipment, UE) can use different FFP periods and/or different FFP starting positions. Such configuration features flexibility to meet URLLC transmission requirements. The UE can use its own FFP to initiate a channel occupancy time (Channel Occupancy Time, COT) for transmission, or may share a COT initiated by the base station, that is, the UE can perform uplink transmission in the COT of the base station.

However, in the FBE channel access mechanism, data transmission is not allowed in an idle period (idle period) of an FFP, and configuration for repetition transmission is independent of configuration for FFP, which may result in a mismatch between the two. For example, repetition transmission may be configured to be performed within the idle period of the FFP; and consequently, the UE cannot determine how to perform repetition transmission.

### SUMMARY

Embodiments of this application provide a data transmission method and apparatus, and UE, so as to resolve the problem that when repetition transmission is configured to be performed in an idle period of FFP, the UE cannot determine how to perform repetition transmission.

According to a first aspect, an embodiment of this application provides a data transmission method. The method includes: in a case that a time-domain resource of first data overlaps with a first idle period, transmitting, by UE, first data according to a first transmission rule; where the first data is data for repetition transmission, the first idle period is an idle period of a first fixed frame period FFP, and the first FFP is an FFP used by the UE.

According to a second aspect, an embodiment of this application provides a data transmission apparatus. The data transmission apparatus includes: a transmission module, where the transmission module is configured to: in a case that a time-domain resource of first data overlaps with a first idle period, transmit the first data according to a first transmission rule; where the first data is data for repetition transmission, the first idle period is an idle period of a first fixed frame period FFP, and the first FFP is an FFP used by UE.

According to a third aspect, an embodiment of this application provides UE, where the UE includes a processor, a memory, and a program or instructions stored in the memory and capable of running on the processor, and when the program or the instructions are executed by the processor, the steps of the data transmission method according to the first aspect are implemented.

According to a fourth aspect, an embodiment of this application provides a readable storage medium, where a program or instructions are stored in the readable storage medium, and when the program or the instructions are executed by a processor, the steps of the data transmission method according to the first aspect are implemented.

According to a fifth aspect, an embodiment of this application provides a chip, where the chip includes a processor and a communications interface, the communications interface is coupled to the processor, and the processor is configured to run a program or instructions to implement the data transmission method according to the first aspect.

In the embodiments of this application, in a case that the time-domain resource of the first data overlaps with the first idle period, the UE transmits the first data according to the first transmission rule; where the first data is data for repetition transmission, the first idle period is an idle period of the first FFP, and the first FFP is an FFP used by the UE. That is, in the process of data repetition transmission performed by the UE, there is a conflict between the time-domain resource of the first data in data for repetition transmission to be transmitted by the UE and the idle period of the FFP used by the UE. In other words, in a case that the UE is configured to perform data repetition transmission in the idle period of the FFP, the UE can transmit the first data according to the first transmission rule, thereby completing the repetition transmission and avoiding the problem that the UE does not know how to transmit data in a case that repetition transmission is configured to be performed in an idle period of an FFP used by the UE.

### BRIEF DESCRIPTION OF DRAWINGS

FIG. 1 is a schematic diagram of an FFP structure according to an embodiment of this application;
FIG. 2 is a first schematic diagram of transmission resources according to an embodiment of this application;
FIG. 3 is a schematic diagram of a wireless communication system according to an embodiment of this application;
FIG. 4 is a first schematic flowchart of a data transmission method according to an embodiment of this application;
FIG. 5 is a second schematic flowchart of a data transmission method according to an embodiment of this application;
FIG. 6 is a second schematic diagram of transmission resources according to an embodiment of this application;
FIG. 7 is a third schematic diagram of transmission resources according to an embodiment of this application;
FIG. 8 is a fourth schematic diagram of transmission resources according to an embodiment of this application;
FIG. 9 is a possible schematic structural diagram of a data transmission apparatus according to an embodiment of this application;
FIG. 10 is a possible schematic structural diagram of UE according to an embodiment of this application; and
FIG. 11 is a schematic hardware diagram of UE according to an embodiment of this application.

### DETAILED DESCRIPTION OF EMBODIMENTS

Firstly, the relevant terminologies involved in this application are explained:

### 1. Unlicensed band

In future communication systems, shared spectrum such as unlicensed bands (unlicensed band) can be used as a supplement to licensed bands (licensed band) to facilitate service capacity expansion for operators. To maintain consistency with new radio (New Radio, NR) system deployment and maximize access based on NR unlicensed bands, the unlicensed bands can work in 5GHz, 37GHz, and 60GHz bands.

Generally, unlicensed bands can be shared by multiple radio access technologies (Radio Access Technology, RAT) such as wireless-fidelity (Wireless-Fidelity, WiFi), radar, and long term evolution-licence assisted access (Long Term Evolution-Licence Assisted Access, LTE-LAA). Therefore, in some countries or regions, unlicensed bands need to comply with regulation (regulation) to ensure that all devices can use the resources fairly.

For example, it needs to comply with rules such as listen before talk (listen before talk, LBT) and maximum channel occupancy time (maximum channel occupancy time, MCOT). When the transmit node needs to send information, it needs to do LBT to perform energy detection (energy detection, ED) on surrounding nodes. If a power detected is lower than a threshold, a channel is considered idle and the transmit node may start sending. After the transmit node starts transmission, an occupied channel time cannot exceed the MCOT. If the power detected is higher than or equal to a threshold, the channel is considered busy, and the transmit node cannot perform transmission. The transmit node may be a base station, UE, a Wi-Fi AP, or the like.

### 2. FBE channel access mechanism

Generally, FBE devices use a channel access mechanism based on LBT to occupy the channel. A device that initiates a transmission sequence for one or more continuous transmissions is referred to as an initiating device, and other devices are referred to as responding devices. The FBE device may be an initiating device, a responding device, or a device that supports both initiating and responding. A set of FFP values supported by the device is declared by a device manufacturer, and the value of FFP is between 1ms and 10ms. Transmission can only be started at the beginning of FFP. A device can change an FFP currently applied, and the frequency of change cannot exceed once every 200ms.

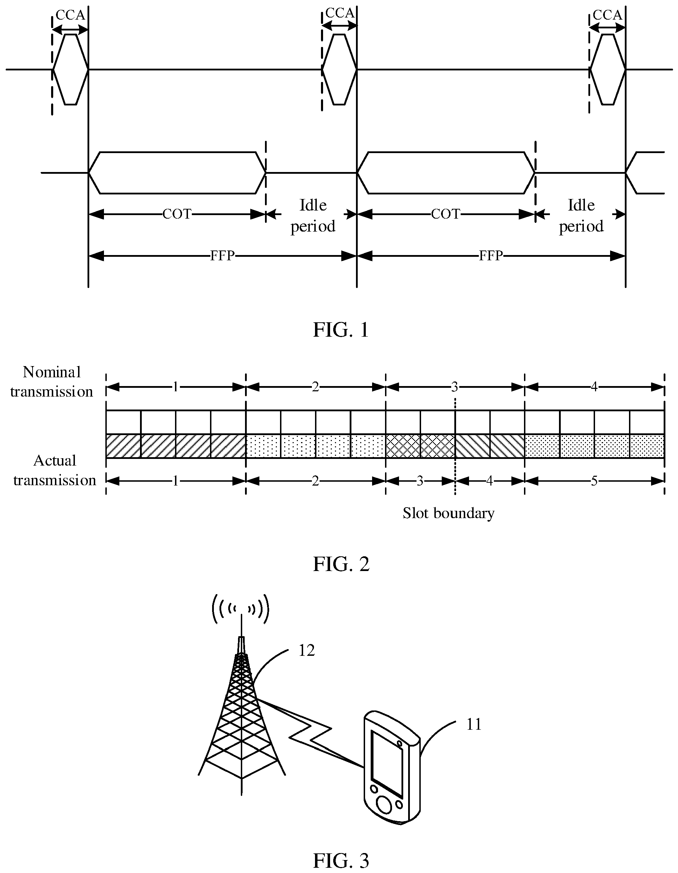

FIG. 1 is a schematic diagram of an FFP structure according to an embodiment of this application. As shown in FIG. 1, the FFP may include a COT and an idle period.

Before start of transmission at a starting time point of an FFP, an initiating device performs clear channel assess (Clear Channel Assess, CCA). As shown in FIG. 1, the device may perform CCA during an idle period of a previous FFP. If a channel is determined to be idle, transmission may be performed immediately; if the channel is determined to be busy, no transmission is allowed within a subsequent FFP duration. That is, before transmission, the initiating device needs to perform one-shot LBT, that is, Cat. 2 LBT. Short control signalling transmissions (Short Control Signalling Transmissions) required by regulations are excluded.

Within an FFP in which data transmission has started, a total duration of transmission that can be performed by the initiating device with no need to reestimate channel availability is defined as COT. A COT cannot be longer than 95% of an FFP, and an idle period follows the COT. The idle period lasts until a starting time point of a next FFP. The length of the idle period is at least 5% of the FFP, with a minimum value of 100µs.

Within the COT, the initiating device is allowed to perform transmission multiple times on a specified channel with no need to perform additional CCA, provided that a time interval between adjacent transmissions does not exceed 16µs. If the time interval between adjacent transmissions within the COT exceeds 16µs, the initiating device needs to perform CCA again before continuing transmission. The initiating device continues transmission when it is determined through CCA that the channel is idle. The time intervals between adjacent transmissions are included in duration of the COT.

The initiating device may assign use authorization of a specified channel in some time periods of a COT to one or more associated responding devices for transmission. After correctly receiving a data packet for a device, the device may immediately transmit a corresponding management and control frame (for example, an ACK frame) corresponding to the data packet on the specified channel without performing CCA. This device needs to ensure that duration of these contiguous transmissions does not exceed the maximum COT duration mentioned above.

After receiving use authorization of a specified channel in some time periods from an initiating device, the responding device performs the following operations: if the responding device initiates transmission no later than 16µs after the last transmission of authorization indicated by the initiating device, the responding device does not need to perform CCA before transmission; if the interval exceeds 16µs, the responding device needs to perform CCA before an authorized transmission period starts. If a channel is determined to be busy, the responding device drops the authorization; if the channel is determined to be idle, the responding device can start transmission on the specified channel. The transmission duration may occupy at most a remaining part of a COT within a current FFP. Multiple transmissions may be started within a time range of the remaining part, provided that a time interval between adjacent transmissions does not exceed 16µs. After transmission, the authorization is dropped.

In Rel-17 URLLC, a gNB and UE can use different FFP periods and/or different FFP starting positions. The network cannot change an FFP configuration of the gNB or UE within 200ms after configuration is completed. The UE may use its own FFP to initiate a COT (that is, UE-initiated COT) for data transmission. The gNB may use its own FFP to initiate a COT (that is, gNB-initiated COT). After the gNB obtains a channel, the gNB starts transmission from a starting position of the FFP of the gNB, and the UE can share the COT of the gNB, that is, the UE can perform uplink transmission within the COT of the gNB.

### 3. Physical uplink shared channel (Physical Uplink Shared Channel, PUSCH) repetition transmission

In Rel-16, for URLLC services, in order to improve requirements for latency and reliability, in a case that PUSCH repetition transmission is PUSCH repetition type B, PUSCH repetition transmission across slot boundary (slot boundary) is supported. That is, when a PUSCH transmission occurs on a slot boundary, an uplink-downlink switching point, or an invalid symbol, the PUSCH may be divided into multiple parts. Each repetition transmission indicated by the network device may be referred to as nominal repetition transmission. During division of one nominal PUSCH, each part with valid symbols is referred to as actual repetition transmission.

It should be noted that if a nominal transmission occurs on an unavailable symbol, the actual transmission may be cancelled or dropped (drop). The unavailable symbol includes one of the following: synchronization signal and physical broadcast channel block (Synchronization Signal and PBCH block, SSB), symbols of control resource set 0 (CORESET 0), unavailable symbols configured using radio resource control (Radio Resource Control, RRC) configuration, and semi-static downlink (Downlink, DL) symbols.

It can be understood that the number of nominal repetition transmissions indicated or notified by the network device may not be equal to the number of actual repetition transmissions.

FIG. 2 is a schematic diagram of transmission resources according to an embodiment of this application. As shown in FIG. 2, four nominal repetition transmissions are included, each repetition transmission lasting for four symbols and the number of nominal repetition transmissions being 4. When nominal transmission 3 crosses a slot boundary, the nominal transmission 3 is divided into two actual transmissions and the number of actual transmissions is 5 in this case.

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-Advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, an NR system is described for an illustration purpose, and NR terms are used in most of the following descriptions, although these technologies may also be applied to other applications than an NR system application, for example, the 6th generation (6th Generation, 6G) communications system.

FIG. 3 is a schematic diagram of a wireless communications system to which the embodiments of this application are applicable. The wireless communications system includes UE 11 and a network device 12. The UE 11 may also be referred to as a terminal device or user terminal, and the UE 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a wrist band, earphones, glasses, or the like. It should be noted that a specific type of the UE 11 is not limited in the embodiments of this application. The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example and a specific type of the base station is not limited.

The following describes in detail a data transmission method provided in the embodiments of this application by using specific embodiments and application scenarios thereof with reference to the accompanying drawings.

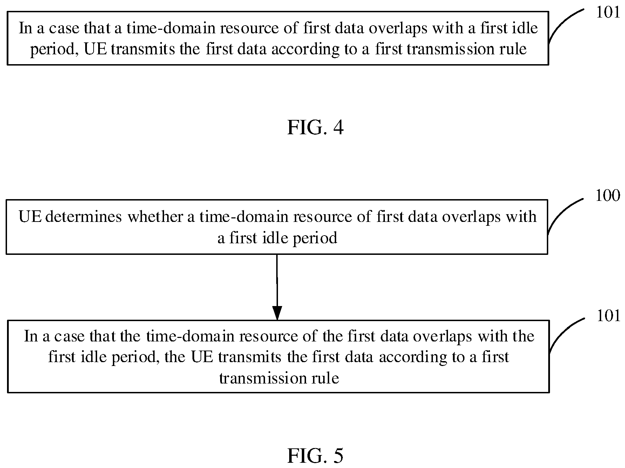

FIG. 4 is a schematic flowchart of a data transmission method according to an embodiment of this application. As shown in FIG. 4, the data transmission method includes the following step 101.

Step 101: In a case that a time-domain resource of first data overlaps with a first idle period, UE transmits the first data according to a first transmission rule.

The first data is data for repetition transmission, the first idle period is an idle period of a first FFP, and the first FFP is an FFP used by the UE.

It should be noted that the first data may be data sent by the UE or data received by the UE, which is not specifically limited in this embodiment of this application.

Optionally, the first data is any one of the following: data carried on PUSCH and data carried on physical downlink shared channel (Physical downlink shared channel, PDSCH).

For example, the first data may be data for repetition transmission on the PUSCH, and the first data may be data for repetition transmission on the PDSCH.

Optionally, the first FFP is an FFP used for data transmission in a UE-initiated COT (referred to as UE-initiated COT), or an FFP used for data transmission in a base station-initiated COT (referred to as gNB-initiated COT) shared by the UE.

Further, in a case of data transmission in the UE-initiated COT, the first idle period is an idle period of an FFP corresponding to the UE-initiated COT; in a case of data transmission in the base station-initiated COT shared by the UE, the first idle period is an idle period of an FFP corresponding to the gNB-initiated COT.

Optionally, a repetition type of repetition transmission is repetition type A or repetition type B.

For example, the first data may be any one of the following: data carried on PUSCH and having a repetition type of repetition transmission being repetition type A (referred to as PUSCH repetition type A); data carried on PDSCH and having a repetition type of repetition transmission being repetition type A (referred to as PDSCH repetition type A); data carried on PUSCH and having a repetition type of repetition transmission being repetition type B (referred to as PUSCH repetition type B); and data carried on PDSCH and having a repetition type of repetition transmission being repetition type B (referred to as PDSCH repetition type B).

For example, the UE may transmit the first data according to the first transmission rule based on time domain information of the first idle period.

The time domain information of the first idle period includes at least one of the following: a starting time domain position of the first idle period, an ending time domain position of the first idle period and duration of the first idle period.

It should be noted that the time-domain resource of the first data overlapping with the first idle period may be any one of the following: the entire time-domain resource of the first data overlaps with the first idle period, or part of the time-domain resource of the first data overlaps with the first idle period.

According to the data transmission method provided in this embodiment of this application, in the case that the time-domain resource of the first data overlaps with the first idle period, the UE transmits the first data according to the first transmission rule; where the first data is data for repetition transmission, the first idle period is an idle period of the first FFP, and the first FFP is an FFP used by the UE. That is, in the process of data repetition transmission performed by the UE, there is a conflict between the time-domain resource of the first data in data for repetition transmission to be transmitted by the UE and the idle period of the FFP used by the UE. In other words, in a case that the UE is configured to perform data repetition transmission in the idle period of the FFP, the UE can transmit the first data according to the first transmission rule, thereby completing the repetition transmission and avoiding the problem that the UE does not know how to transmit data in a case that repetition transmission is configured to be performed in an idle period of an FFP used by the UE.

Optionally, with reference to FIG. 4, as shown in FIG. 5, the data transmission method provided in this embodiment of this application may further include the following step 100 before the foregoing step 101:
Step 100: The UE determines whether the time-domain resource of the first data overlaps with the first idle period.

For example, based on target configuration information, the UE may determine whether the time-domain resource of the first data overlaps with the first idle period.

The target configuration information includes first configuration information and second configuration information, the first configuration information includes time domain information of the first data, and the second configuration information includes time domain information of the first idle period.

Optionally, in the data transmission method provided in this embodiment of this application, the foregoing step 101 can be performed specifically based on step 101a or step 101b.

Step 101a: In a case that the time-domain resource of the first data overlaps with the first idle period, the UE cancels transmission of the first data.

It can be understood that in this embodiment of this application, the UE cancels transmission of the first data in the data for repetition transmission, while continuing to transmit other data for repetition transmission.

For example, if the UE has four pieces of data for repetition transmission, and a time-domain resource of repetition 3 overlaps with idle period 1 of FFP 1, the UE may cancel transmission of repetition 3 and continue to transmit repetition 4.

### Example 1:

For PUSCH repetition type A, if a time-domain resource of a PUSCH repetition overlaps with an idle period, the UE may drop the entire PUSCH repetition.

### Example 2:

For PUSCH repetition type B, if a time-domain resource of PUSCH nominal repetition 1 overlaps with idle period 1 of FFP 1, the UE may drop the entire PUSCH nominal repetition 1 that overlaps with the idle period; if a time-domain resource of PUSCH actual repetition 1 overlaps with the idle period 1 of FFP 1, the UE may drop the entire PUSCH actual repetition 1 that overlaps with the idle period.

The idle period in example 1 and example 2 may be an idle period of the FFP corresponding to the UE-initiated COT, or may be an idle period of the FFP corresponding to the gNB when the gNB-initiated COT is shared by the UE.

Step 101b: In a case that the time-domain resource of the first data overlaps with the first idle period, the UE transmits the first data a first time-domain resource.

The first time-domain resource is an available time-domain resource behind the first idle period.

For example, the available resource is an available time-domain resource determined by the UE.

It can be understood that if other data for repetition transmission is not included behind the first data, the UE delays transmission of the first data; if data for repetition transmission is further included behind the first data, the UE delays transmission of both the first data and the repetition data behind the first data.

To be specific, the UE does not drop any data, but postpones transmission of both the first data and the data for repetition transmission behind the first data. If a time-domain resource of the data for repetition transmission overlaps with the idle period again, the UE may continue to postpone the transmission.

For example, the number of pieces of data for repetition transmission is 4, and a time-domain resource for repetition 3 overlaps with the first idle period. The UE postpones the repetition 3 until an available time-domain resource behind the first idle period, and continue to transmit the repetition 4 after the repetition 3 is completed.

### Example 3:

When a time-domain resource for PUSCH repetition (type A or type B) overlaps with the idle period, the entire PUSCH repetition overlapping with the idle period may be postponed until a next available resource for transmission.

Optionally, the first time-domain resource is an available time-domain resource behind the first idle period among time-domain resources corresponding to a next FFP after the first FFP.

Referring to FIG. 5, the time-domain resource for repetition 3 overlaps with idle period 1 of FFP 1, and the UE may determine whether there is an available time-domain resource in a time period of FFP 2. If there is an available time-domain resource in the time period of FFP 2, the UE transmits repetition 3 on the available time-domain resource.

Optionally, in the data transmission method provided in this embodiment of this application, the foregoing step 101b can be performed through step 101b1 or step 101b2.

Step 101b 1: In a case that the time-domain resource of the first data overlaps with the first idle period, if a channel is detected to be idle before the next FFP after the first FFP, the UE transmits the first data on the first time-domain resource.

The first FFP is an FFP used for data transmission in a COT initiated by the UE.

For example, the UE may perform LBT before the next FFP after the first FFP to determine whether the channel in the next FFP after the first FFP is idle.

For example, referring to FIG. 5, idle period 1 is an idle period of FFP 1, and FFP 2 is a next FFP of FFP 1. The UE may perform LBT during idle period 1 of FFP 1 to determine whether a channel in FFP 2 is idle.

Step 101b2: In a case that the time-domain resource of the first data overlaps with the first idle period, if channel sharing information is detected within the next FFP after the first FFP, transmit the first data on the first time-domain resource.

The first FFP is an FFP used for data transmission in a base station-initiated COT shared by the UE.

For example, the gNB configures PUSCH repetition (type A or type B) for the UE. The transmission procedure includes four repetition transmissions. The time-domain resource of repetition 3 overlaps with the idle period of the FFP used by the UE

### Example 4:

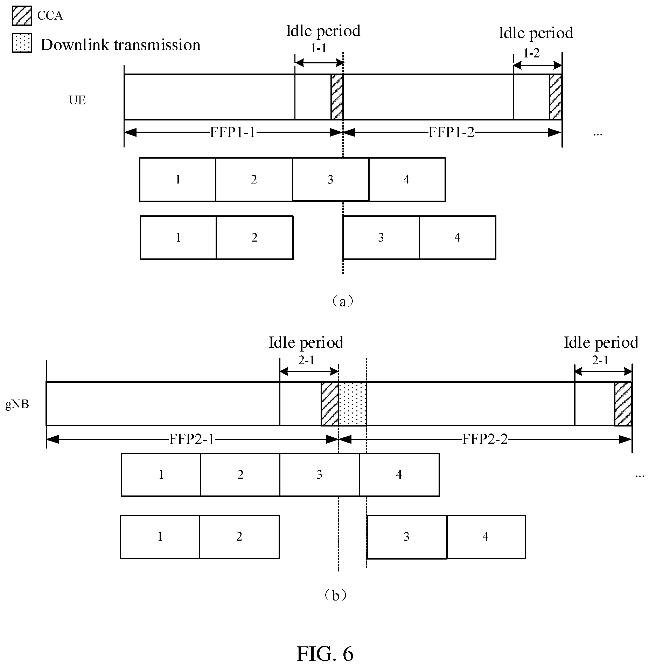

Referring to (a) of FIG. 6, the UE performs transmission in a UE-initiated COT, and a time-domain resource of repetition 3 overlaps with idle period 1-1 corresponding to FFP 1-1 of the UE. After the UE completes transmission of repetition 1 and repetition 2, the UE performs LBT during idle period 1-1 of FFP 1-1 to determine that a channel in FFP 1-2 is idle. In this case, the UE continues to transmit repetition 3 and repetition 4 on available resources in FFP 1-2. For example, the UE starts transmitting repetition 3 and repetition 4 from a starting position of FFP 1-2.

### Example 5:

Referring to (b) of FIG. 6, the UE shares a gNB-initiated COT, and a time-domain resource of repetition 3 overlaps with idle period 2-1 corresponding to FFP 2-1 of the gNB. After the UE completes transmission of repetition 1 and repetition 2, the UE detects whether there is channel sharing information in FFP 2-2. In a case that the channel sharing information is detected, the UE continues to transmit repetition 3 and repetition 4 in the gNB-initiated COT detected in FFP 2-2. For example, the UE transmits repetition 3 and repetition 4 after downlink transmission in FFP 2-2.

The channel sharing information may be any downlink signalling or signal sent by the base station, or downlink signalling or signal sent in a specified position, or a dedicated channel sharing indication information.

That is, the UE does not drop any repetition transmission. When repetition transmission overlaps with the idle period of the FFP used by the UE, the UE may postpone the repetition transmission until the next available resource for transmission.

It should be noted that in the process of repetition transmission, the foregoing four repetition transmissions may all be nominal repetition transmissions, or may include actual repetition transmissions segmented according to other rules (such as slot boundaries), which is not specifically limited in this embodiment of this application.

Based on this solution, in a case that the time-domain resource of the first data overlaps with the first idle period, the UE may first determine whether there is an available time-domain resource in the next FFP. If there is an available time-domain resource in the next FFP, for example, in a case that the UE performs data transmission in a COT initiated by the UE, the UE may perform CCA in the idle period of the first FFP to determine whether the channel in the second FFP is idle. In a case that the channel in the second FFP is idle, the first data may be postponed until the second FFP for transmission. In a case that the UE performs data transmission in a COT of the base station shared by the UE, the UE may detect whether channel sharing information is received in the second FFP. If the channel sharing information is detected in the second FFP, the UE may postpone the first data until the second FFP for transmission.

Optionally, when the repetition type of repetition transmission is repetition type A, the UE may puncture part of transmission overlapping with the idle period.

For example, if the first data is PUSCH repetition type A and the first data is data for transmission after puncturing of configured repetition transmission, the UE may drop the part of transmission overlapping with the idle period in the first data.

Optionally, in the data transmission method provided in this embodiment of this application, in a case that the repetition type of repetition transmission is repetition type B, the above step 101 may be performed through the following steps 101c1 and 101c2.

Step 101c1: In a case that the time-domain resource of the first data overlaps with the first idle period, the UE segments the first data based on a target idle period.

The target idle period is the first idle period or a second idle period, the second idle period being an idle period of an FFP to which the UE is to be switched.

For example, the UE may segment the first data based on starting and ending positions of the first idle period.

It should be noted that the foregoing repetition transmissions may be nominal repetition transmissions or actual repetition transmissions (which are actual repetition transmissions that have been segmented according to other rules). That is, the first data segmented by the UE may be a nominal repetition transmission configured by the network, or may be an actual repetition transmission obtained by segmenting the nominal repetition transmission.

For example, the first data may be PUSCH repetition type B (PUSCH repetition type B).

Step 101c2: The UE cancels transmission of a first part of the first data.

The first part is a part overlapping the target idle period in the first data.

It can be understood that if a time-domain resource of one repetition transmission overlaps with an idle period of an FFP used by the UE, the UE may segment (split or segmentation) the repetition transmission based on the idle period, and then the UE cancels (drop) part of the repetition transmission overlapping with the idle period.

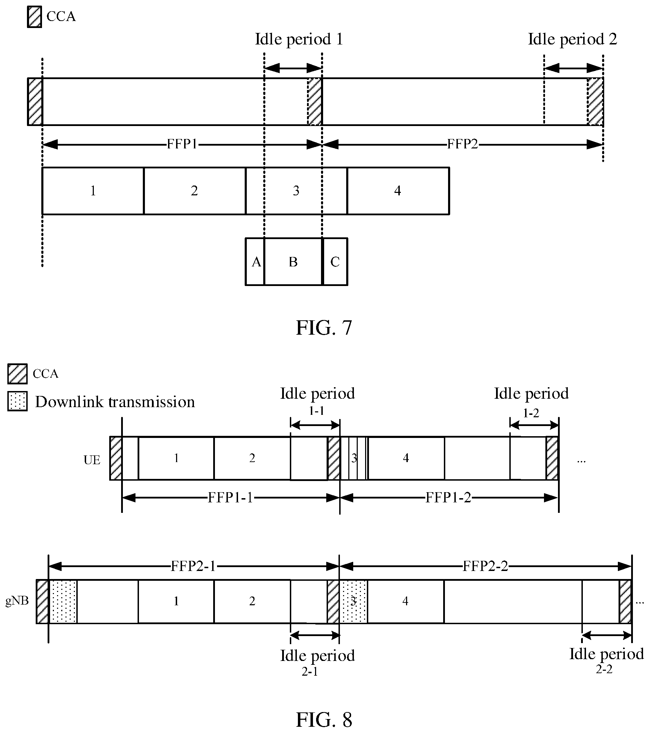

For example, with reference to FIG. 7, a time-domain resource of repetition 3 overlaps with idle period 1 of FFP 1, and the UE may segment repetition 3 into three parts A, B, and C based on starting and ending positions of idle period 1. A time domain resource corresponding to part B overlaps with repetition 3 and idle period 1 (that is, part B is the foregoing first part), part A is a part ahead of the first part, and part C is a part behind the first part. The UE may cancel transmission of part B of repetition 3.

It should be noted that in practical applications, after segmentation, data not overlapping with the idle period in the first data may include one or two parts, which is not specifically limited in this embodiment of this application.

Optionally, in the data transmission method provided in this embodiment of this application, after the foregoing step 101c1, the following step 101c3 or step 101c4 may be further included.

Step 101c3: If a transmission duration of a second part of the first data is less than or equal to a preset threshold, the UE cancels transmission of the second part of the first data.

Step 101c4: If the transmission duration of the second part of the first data is greater than the preset threshold, the UE transmits the second part of the first data.

The second part of the first data includes at least one of the following: a part ahead of the first part in the first data or a part behind the first part in the first data.

It should be noted that the transmission duration of the second part being less than or equal to the preset threshold may indicate that a data amount of the second part is relatively small; and the transmission duration of the second part being greater than the preset threshold may indicate that the data amount of the second part is relatively large.

It should be noted that a value range of the preset threshold may be set according to actual needs, which is not specifically limited in this embodiment of this application.

For example, with reference to FIG. 7, if a transmission length of part A is less than or equal to X, part A is dropped; if the transmission length of part A is greater than X, part A is transmitted; if a transmission length of part C is less than or equal to X, part C is dropped; or if the transmission length of part C is greater than X, part C is transmitted; where X = 1 symbol.

It can be understood that when the transmission lengths of part A and part C are both less than or equal to X, the UE drops all the first data.

Based on this solution, when the time-domain resource of the first data overlaps with the first idle period, the UE may segment the first data based on the first idle period and cancels transmission of the first part, and then determines whether to cancel transmission based on the transmission length of the second part. In a case that the transmission length of the second part is less than or equal to the preset threshold, transmission of the second part is cancelled; in a case that the transmission length of the second part is greater than the preset threshold, the second part is transmitted.

Optionally, in the data transmission method provided in this embodiment of this application, in a case that the first FFP is an FFP used for data transmission in a base station-initiated COT shared by the UE, if the time-domain resource of the first data overlaps with the first idle period, the UE may switch to an FFP initiated by UE for subsequent repetition transmission. The second FFP is an FFP used for data transmission in a COT initiated by the UE, and the UE may segment the first data based on the second idle period, where the second idle period is an idle period of the second FFP.

It should be noted that the first data may overlap with the idle period of the second FFP, or may not overlap with the idle period of the second FFP. In the case of overlapping, the UE segments the first data based on the idle period of the second FFP

Furthermore, after the foregoing step 101cl, the following step 101c5 may be further included.

Step 101c5: Based on the second FFP, the UE transmits the second part of the first data and other data.

The second part of the first data is a part behind the first part in the first data, and the other data is data for repetition transmission behind the first data.

In other words, in a case that the time-domain resource of the first data overlaps with the idle period, the UE may switch a COT used for transmitting data. In a case that the UE shares a COT initiated by the base station, the UE cannot complete all repetition transmissions in the COT of the base station. In this case, the UE may initiate its own COT, and the UE may segment the first data based on the idle period of the second FFP and completes, based on the second FFP of the UE, transmission of remaining data for repetition transmission.

That is, in a case that the UE shares the gNB-initiated COT for transmitting repetition transmissions, if the UE cannot complete transmission of all PUSCH repetitions in the gNB-initiated COT, because each gNB-initiated COT starts with downlink transmission, the UE may choose based on FFP configuration of the UE to switch to the UE-initiated COT for data transmission.

### Example 6:

With reference to FIG. 8, the network device configures four PUSCH nominal repetition transmissions for the UE. The UE shares a gNB-initiated COT to transmit the four nominal repetition transmissions. The UE may transmit PUSCH nominal repetitions 1 and 2 in FFP 2-1. The UE cannot complete all repetition transmissions in FFP 2-1. An uplink transmission is present at a starting time-domain position of FFP 2-2. If there is an overlapping area between a time-domain resource of nominal repetition 3 and idle period 1-1 of FFP 1-1, the UE segments nominal repetition 3 based on idle period 1-1 of FFP 1-1 of the UE, drops a PUSCH part corresponding to idle period 1-1, and performs LBT before start (that is, idle period 1-1 of FFP 1-1) of FFP 1-2 (that is, the one following FFP 1-1). If it is determined that a channel in FFP 1-2 is idle, the UE continues to transmit actual repetition 3 after segmentation and nominal repetition 4 in the UE-initiated COT, and the UE starts transmitting actual repetition 3 from a starting position of FFP 1-2.

It can be understood that in the actual transmission process, a nominal repetition transmission without segmentation is an actual repetition transmission.

Based on this solution, in a case that the UE shares the COT of the gNB for transmitting data for repetition transmission, if the time-domain resource of the first data overlaps with the first idle period, the UE segments the first data based on the second idle period. Because each gNB-initiated COT starts with downlink transmission, that is, downlink data needs to be transmitted at a starting position of an FFP of each gNB, if the UE continues to share the COT of the gNB for transmitting remaining data, data transmission that overlaps with downlink data at the starting position of the FFP of the gNB needs to be dropped. Therefore, in the foregoing data segmentation and FFP switching manner, failures of the UE in transmission at the starting position of the next FFP of the gNB can be avoided, so as to reduce loss of data for repetition transmission.

In this embodiment of this application, under an FBE channel access mechanism, the UE can flexibly segment the nominal shared channel transmission based on the FFP of the gNB and/or UE and selects a COT, so as to complete repetition transmission of a shared channel with minimal loss.

Optionally, in the data transmission method provided in this embodiment of this application, after the foregoing step 101a or step 101c3, the method may further include step 102.

Step 102: In a case that transmission of data on a second time-domain resource is cancelled, the UE transmits other uplink signals on the second time-domain resource.

The second time-domain resource is a time-domain resource of the first data, a starting position of the second time-domain resource aligns with a starting position of a third FFP, and the third FFP is a next FFP after the first FFP.

That is, in a case that the UE cancels transmission of the first data or the UE cancels part of data in the first data, it is likely to have no data transmission on the time-domain resource at the starting position of the next FFP after the first FFP. In this case, the UE may start to add other uplink signals at the starting position for transmission. Optionally, other uplink signals may include sounding reference signal (Sounding Reference Signal, SRS), demodulation reference signal (Demodulation Reference Signal, DMRS), or the like.

### Example 7:

If the UE does not segment repetition 3 based on an idle period and directly drops repetition 3, or with reference to FIG. 7 or FIG. 8, after segmentation of repetition 3 based on the idle period, in a case that a transmission length of a second part of an actual transmission is less than a preset threshold, the second part is dropped. After the foregoing two types of processing, if no data transmission starts on a starting time-domain resource of the next FFP, for example, there is no data transmission on a time-domain resource corresponding to part C in FIG. 7, the UE may add other data to the time-domain resource corresponding to part C.

Based on this solution, when the time-domain resource of the first data overlaps with the first idle period, if the UE drops the first data or drops the second part of the first data after segmentation, it is likely to have no data transmission at the starting position of the second FFP. Because the UE needs to start transmission from the starting position of the FFP in the UE-initiated COT, other uplink signals are added to a resource corresponding to PUSCH repetition at the starting position of FFP 2, so as to avoid the problem of no data transmission at the starting position of the second FFP due to dropping of data.

Optionally, in this embodiment of this application, it may be specified that repetition transmission is not allowed to be scheduled to an idle period of an FFP corresponding to a COT in which the UE performs transmission.

It should be noted that the data transmission method provided in the embodiments of this application is executed by a data transmission apparatus or a control module for executing the data transmission method in the data transmission apparatus. In the embodiments of this application, the data transmission apparatus provided by the embodiments of this application is described by using the data transmission method being executed by the data transmission apparatus as an example.

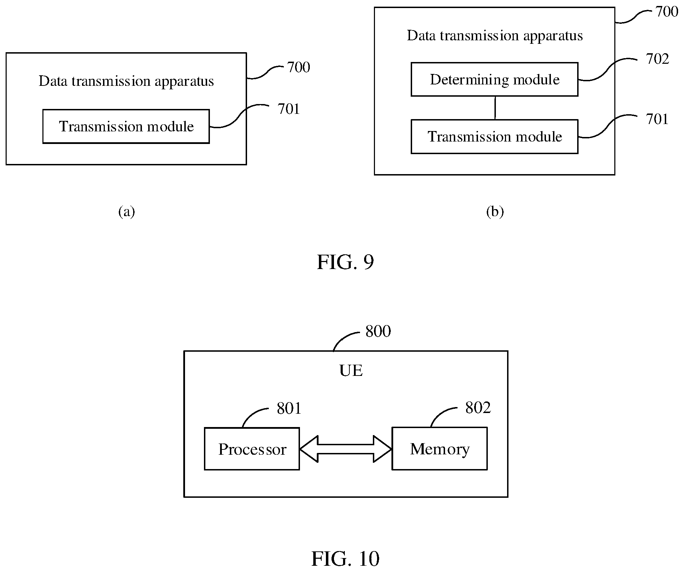

FIG. 9 is a possible schematic structural diagram of a data transmission apparatus according to an embodiment of this application. As shown in (a) of FIG. 9, the data transmission apparatus 700 includes: a transmission module 701. The transmission module 701 is configured to: in a case that a time-domain resource of first data overlaps with a first idle period, transmit the first data according to a first transmission rule; where the first data is data for repetition transmission, the first idle period is an idle period of a first fixed frame period FFP, and the first FFP is an FFP used by user equipment UE.

Optionally, as shown in (b) of FIG. 9, the data transmission apparatus 700 further includes a determining module 702. The determining module 702 is configured to determine whether the time-domain resource of the first data overlaps with the first idle period.

Optionally, a repetition type of the repetition transmission is repetition type A or repetition type B; and the transmission module is specifically configured to: cancel transmission of the first data; or, transmit the first data on a first time-domain resource, where the first time-domain resource is an available time-domain resource behind the first idle period.

Optionally, the first time-domain resource is an available time-domain resource behind the first idle period among time-domain resources corresponding to a next FFP after the first FFP.

Optionally, the transmission module is specifically configured to: if a channel is detected to be idle before the next FFP, transmit the first data on the first time-domain resource, where the first FFP is an FFP used for transmitting data in a channel occupancy time COT initiated by the UE; or, if channel sharing information is detected within the next FFP, transmit the first data on the first time-domain resource, where the first FFP is an FFP used for data transmission in a COT initiated by a base station and shared by the UE.

Optionally, a repetition type of the repetition transmission is repetition type B; and the transmission module is specifically configured to: segment the first data based on a target idle period, where the target idle period is the first idle period or a second idle period, the second idle period being an idle period of an FFP to which the LTE is to be switched; and cancel transmission of a first part of the first data; where the first part is a part overlapping the target idle period in the first data.

Optionally, the transmission module is specifically configured to: after segmentation of the first data, if a transmission duration of a second part of the first data is less than or equal to a preset threshold, cancel transmission of the second part of the first data; or after segmentation of the first data, if a transmission duration of a second part of the first data is greater than a preset threshold, transmit the second part of the first data; where the second part includes at least one of the following: a part ahead of the first part in the first data or a part behind the first part in the first data.

Optionally, the first FFP is an FFP used for data transmission in a COT initiated by a base station and shared by the UE, the second idle period is an idle period of a second FFP, and the second FFP is an FFP used for data transmission in a COT initiated by the UE. The transmission module is further configured to: after segmentation of the first data, transmit, based on the second FFP, a second part of the first data and other data; where the second part is a part behind the first part in the first data, and the other data is data for repetition transmission behind the first data.

The transmission module is further configured to: in a case that transmission of data on a second time-domain resource is cancelled, transmit other uplink signals on the second time-domain resource; where the second time-domain resource is a time-domain resource of the first data, a starting position of the second time-domain resource aligns with a starting position of a third FFP, and the third FFP is a next FFP after the first FFP.

Optionally, the first FFP is an FFP used for data transmission in a COT initiated by the UE or an FFP used for data transmission in a COT initiated by a base station and shared by the UE.

Optionally, the first data is any one of the following: data carried on a physical uplink shared channel PUSCH or data carried on a physical downlink shared channel PDSCH.

According to the data transmission apparatus provided in this embodiment of this application, in the case that the time-domain resource of the first data overlaps with the first idle period, the data transmission apparatus transmits the first data according to the first transmission rule; where the first data is data for repetition transmission, the first idle period is an idle period of the first FFP, and the first FFP is an FFP used by the UE. That is, in the process of data repetition transmission performed by the UE, there is a conflict between the time-domain resource of the first data in data for repetition transmission to be transmitted by the UE and the idle period of the FFP used by the UE. In other words, in a case that the UE is configured to perform data repetition transmission in the idle period of the FFP, the data transmission apparatus can transmit the first data according to the first transmission rule, thereby completing the repetition transmission and avoiding the problem that the UE does not know how to transmit data in a case that repetition transmission is configured to be performed in an idle period of an FFP used by the UE.

The data transmission apparatus in this embodiment of this application may be an apparatus, or may be a component, an integrated circuit, or a chip in the terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network-attached storage (Network Attached Storage, NAS), a personal computer (personal computer, PC), a television (television, TV), a teller machine, a self-service machine, or the like. This is not specifically limited in the embodiments of this application.

The data transmission apparatus in this embodiment of this application may be an apparatus having an operating system. The operating system may be an Android (Android) operating system, an iOS operating system, or other possible operating systems, and is not specifically limited in the embodiments of this application.

The data transmission apparatus provided in this embodiment of this application is capable of implementing the processes implemented by the data transmission apparatus in the method embodiments in FIG. 4 to FIG. 8. To avoid repetition, details are not described herein again.

Optionally, as shown in FIG. 10, an embodiment of this application further provides UE 800, including a processor 801, a memory 802, and a program or instructions stored in the memory 802 and capable of running on the processor 801. When the program or the instructions are executed by the processor 801, the processes of the foregoing embodiments of the data transmission method are implemented, with the same technical effects achieved. To avoid repetition, details are not described herein again.

It should be noted that the UE in this embodiment of this application includes the aforementioned mobile electronic device and non-mobile electronic device.

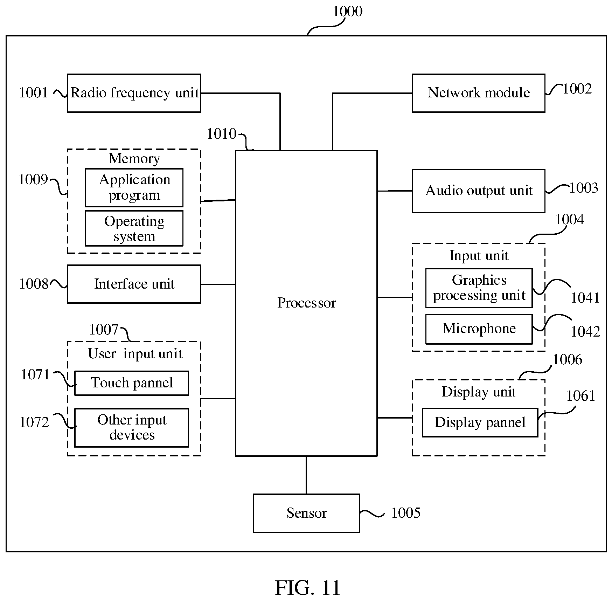

FIG. 11 is a schematic diagram of a hardware structure of UE for implementing the embodiments of this application.

The UE 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the *UE* 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the UE shown in FIG. 11 does not constitute any limitation on the UE. The UE may include more or fewer components than shown in the figure, or a combination of some components, or the components disposed differently. Details are not repeated herein.

The radio frequency unit 1001 is configured to: in a case that a time-domain resource of first data overlaps with a first idle period, the UE transmits the first data according to a first transmission rule; where the first data is data for repetition transmission, the first idle period is an idle period of the first FFP, and the first FFP is an FFP used by the UE.

According to the UE provided in this embodiment of this application, in a case that the time-domain resource of the first data overlaps with the first idle period, the UE transmits the first data according to the first transmission rule; where the first data is data for repetition transmission, the first idle period is an idle period of the first FFP, and the first FFP is an FFP used by the UE. That is, in the process of data repetition transmission performed by the UE, there is a conflict between the time-domain resource of the first data in data for repetition transmission to be transmitted by the UE and the idle period of the FFP used by the UE. In other words, in a case that the UE is configured to perform data repetition transmission in the idle period of the FFP, the UE can transmit the first data according to the first transmission rule, thereby completing the repetition transmission and avoiding the problem that the UE does not know how to transmit data in a case that repetition transmission is configured to be performed in an idle period of an FFP used by the UE.

Optionally, a repetition type of the repetition transmission is repetition type A or repetition type B. The radio frequency unit 1001 is further configured to: for the UE, cancel transmission of the first data; or, transmit, for the UE, the first data on a first time-domain resource, where the first time-domain resource is an available time-domain resource behind the first idle period.

Optionally, the radio frequency unit 1001 is specifically configured to: if a channel is detected to be idle before the next FFP, transmit the first data on the first time-domain resource, where the first FFP is an FFP used for transmitting data in a channel occupancy time COT initiated by the UE; or, if channel sharing information is detected within the next FFP, transmit the first data on the first time-domain resource, where the first FFP is an FFP used for data transmission in a COT initiated by a base station and shared by the UE.

Optionally, the radio frequency unit 1001 is specifically configured to: segment the first data based on a target idle period, where the target idle period is the first idle period or a second idle period, the second idle period being an idle period of an FFP to which the UE is to be switched; and cancel transmission of a first part of the first data; where the first part is a part overlapping the target idle period in the first data.

Optionally, the radio frequency unit 1001 is further configured to: after segmentation of the first data, if a transmission duration of a second part of the first data is less than or equal to a preset threshold, cancel transmission of the second part of the first data; or after segmentation of the first data, if a transmission duration of a second part of the first data is greater than a preset threshold, transmit the second part of the first data; where the second part includes at least one of the following: a part ahead of the first part in the first data or a part behind the first part in the first data.

Optionally, the first FFP is an FFP used for data transmission in a COT initiated by a base station and shared by the UE, the second idle period is an idle period of a second FFP, and the second FFP is an FFP used for data transmission in a COT initiated by the UE. The radio frequency unit 1001 is further configured to: after segmentation of the first data, transmit, based on the second FFP, a second part of the first data and other data; where the second part is a part behind the first part in the first data, and the other data is data for repetition transmission behind the first data.

The radio frequency unit 1001 is further configured to: in a case that transmission of data on a second time-domain resource is cancelled, transmit other uplink signals on the second time-domain resource; where the second time-domain resource is a time-domain resource of the first data, a starting position of the second time-domain resource aligns with a starting position of a third FFP, and the third FFP is a next FFP after the first FFP.

It should be understood that in this embodiment of this application, the input unit 1004 may include a graphics processing unit (graphics processing unit, GPU) 1041 and a microphone 1042. The graphics processing unit 1041 processes image data of a static picture or a video that is obtained by an image capture apparatus (for example, a camera) in an image capture mode or a video capture mode. The display unit 1006 may include a display panel 1061. The display panel 1061 may be configured in a form of a liquid crystal display, an organic light-emitting diode display, or the like. The user input unit 1007 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a functional button (such as a volume control button or a power on/off button), a trackball, a mouse, and a joystick. Details are not described herein again. The memory 1009 may be configured to store software programs and various data, including but not limited to application programs and operating systems. The processor 1010 may integrate an application processor and a modem processor. The application processor mainly processes the operating system, a user interface, an application program, and the like. The modem processor mainly processes wireless communication. It can be understood that the modem processor may alternatively be not integrated in the processor 1010.

An embodiment of this invention further provides a readable storage medium, where a program or an instruction is stored in the readable storage medium. When the program or instruction is executed by a processor, the processes of the foregoing data transmission method embodiment can be implemented, with same technical effects achieved. To avoid repetition, details are not described herein again.

The processor is the processor in the UE in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communications interface, the communications interface is coupled to the processor, and the processor is configured to run a program or an instruction to implement the processes of the foregoing data transmission method embodiments, with the same technical effects achieved. To avoid repetition, details are not repeated herein.

It should be understood that the chip mentioned in this embodiment of this application may also be referred to as a system-level chip, a system chip, a chip system, a system-on-chip, or the like.

It should be noted that in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A data transmission method, wherein the method comprises:
in a case that a time-domain resource of first data overlaps with a first idle period, transmitting, by user equipment UE, first data according to a first transmission rule; wherein
the first data is data for repetition transmission, the first idle period is an idle period of a first fixed frame period FFP, and the first FFP is an FFP used by the UE.

2. The method according to claim 1, wherein a repetition type of the repetition transmission is repetition type A or repetition type B; and
the transmitting, by UE, first data according to a first transmission rule comprises:
cancelling transmission of the first data;
or,
transmitting, by the UE, the first data on a first time-domain resource, wherein the first time-domain resource is an available time-domain resource behind the first idle period.

3. The method according to claim 2, wherein the first time-domain resource is an available time-domain resource behind the first idle period among time-domain resources corresponding to a next FFP after the first FFP.

4. The method according to claim 3, wherein the transmitting, by the UE, the first data on a first time-domain resource comprises:
if a channel is detected to be idle before the next FFP, transmitting, by the UE, the first data on the first time-domain resource, wherein the first FFP is an FFP used for data transmission in a channel occupancy time COT initiated by the UE;
or,
if channel sharing information is detected within the next FFP, transmitting the first data on the first time-domain resource, wherein the first FFP is an FFP used for data transmission in a COT initiated by a base station and shared by the UE.

5. The method according to claim 1, wherein a repetition type of the repetition transmission is repetition type B; and
the transmitting, by UE, first data according to a first transmission rule comprises:
segmenting, by the UE, the first data based on a target idle period, wherein the target idle period is the first idle period or a second idle period, the second idle period being an idle period of an FFP to which the UE is to be switched; and
cancelling, by the UE, transmission of a first part of the first data; wherein
the first part is a part overlapping the target idle period in the first data.

6. The method according to claim 5, wherein after the segmenting the first data, the method further comprises:
if a transmission duration of a second part of the first data is less than or equal to a preset threshold, cancelling transmission of the second part of the first data; or
if a transmission duration of a second part of the first data is greater than a preset threshold, transmitting the second part of the first data; wherein
the second part comprises at least one of the following: a part ahead of the first part in the first data or a part behind the first part in the first data.

7. The method according to claim 5, wherein the first FFP is an FFP used for data transmission in a COT initiated by a base station and shared by the UE, the second idle period is an idle period of a second FFP, and the second FFP is an FFP used for data transmission in a COT initiated by the UE; and after the segmenting the first data, the method further comprises:
based on the second FFP, transmitting a second part of the first data and other data; wherein
the second part is a part behind the first part in the first data, and the other data is data for repetition transmission behind the first data.

8. The method according to claim 2 or 6, wherein the method further comprises:
in a case that transmission of data on a second time-domain resource is cancelled, transmitting other uplink signals on the second time-domain resource; wherein
the second time-domain resource is a time-domain resource of the first data, a starting position of the second time-domain resource aligns with a starting position of a third FFP, and the third FFP is a next FFP after the first FFP.

9. The method according to any one of claims 1 to 3, 5, or 6, wherein the first FFP is an FFP used for data transmission in a COT initiated by the UE or an FFP used for data transmission in a COT initiated by a base station and shared by the UE.

10. The method according to claim 1, wherein the first data is any one of the following: data carried on a physical uplink shared channel PUSCH or data carried on a physical downlink shared channel PDSCH.

11. A data transmission apparatus, wherein the data transmission apparatus comprises a transmission module; and
the transmission module is configured to: in a case that a time-domain resource of first data overlaps with a first idle period, transmit the first data according to a first transmission rule; wherein
the first data is data for repetition transmission, the first idle period is an idle period of a first fixed frame period FFP, and the first FFP is an FFP used by user equipment UE.

12. The data transmission apparatus according to claim 11, wherein a repetition type of the repetition transmission is repetition type A or repetition type B; and
the transmission module is specifically configured to:
cancel transmission of the first data;
or,
transmit the first data on a first time-domain resource, wherein the first time-domain resource is an available time-domain resource behind the first idle period.

13. The data transmission apparatus according to claim 12, wherein the first time-domain resource is an available time-domain resource behind the first idle period among time-domain resources corresponding to a next FFP after the first FFP.

14. The data transmission apparatus according to claim 13, wherein the transmission module is specifically configured to:
if a channel is detected to be idle before the next FFP, transmit the first data on the first time-domain resource, wherein the first FFP is an FFP used for data transmission in a channel occupancy time COT initiated by the UE;
or,
if channel sharing information is detected within the next FFP, transmit the first data on the first time-domain resource, wherein the first FFP is an FFP used for data transmission in a COT initiated by a base station and shared by the UE.

15. The data transmission apparatus according to claim 11, wherein a repetition type of the repetition transmission is repetition type B; and the transmission module is specifically configured to:
segment the first data based on a target idle period, wherein the target idle period is the first idle period or a second idle period, the second idle period being an idle period of an FFP to which the UE is to be switched; and
cancel transmission of a first part of the first data; wherein
the first part is a part overlapping the target idle period in the first data.

16. The data transmission apparatus according to claim 15, wherein the transmission module is further configured to:
after segmentation of the first data, if a transmission duration of a second part of the first data is less than or equal to a preset threshold, cancel transmission of the second part of the first data; or
after segmentation of the first data, if a transmission duration of a second part of the first data is greater than a preset threshold, transmit the second part of the first data; wherein
the second part comprises at least one of the following: a part ahead of the first part in the first data or a part behind the first part in the first data.

17. The data transmission apparatus according to claim 15, wherein the first FFP is an FFP used for data transmission in a COT initiated by a base station and shared by the UE, the second idle period is an idle period of a second FFP, and the second FFP is an FFP used for data transmission in a COT initiated by the UE; and
the transmission module is further configured to: after segmentation of the first data, transmit, based on the second FFP, a second part of the first data and other data; wherein
the second part is a part behind the first part in the first data, and the other data is data for repetition transmission behind the first data.

18. The data transmission apparatus according to claim 12 or 16, wherein
the transmission module is further configured to: in a case that transmission of data on a second time-domain resource is cancelled, transmit other uplink signals on the second time-domain resource; wherein
the second time-domain resource is a time-domain resource of the first data, a starting position of the second time-domain resource aligns with a starting position of a third FFP, and the third FFP is a next FFP after the first FFP.

19. The data transmission apparatus according to any one of claims 11 to 13, 15, or 16, wherein the first FFP is an FFP used for data transmission in a COT initiated by the UE or an FFP used for data transmission in a COT initiated by a base station and shared by the UE.

20. The data transmission apparatus according to claim 11, wherein the first data is any one of the following: data carried on a physical uplink shared channel PUSCH or data carried on a physical downlink shared channel PDSCH.

21. User equipment UE, comprising a processor, a memory, and a program or instructions stored in the memory and capable of running on the processor, wherein when the program or the instructions are executed by the processor, the steps of the data transmission method according to any one of claims 1 to 10 are implemented.

22. A readable storage medium, wherein the readable storage medium stores a program or instructions, and when the program or instructions are executed by a processor, the steps of the data transmission method according to any one of claims 1 to 10 are implemented.

23. A computer program product, wherein the program product is executed by at least one processor to implement the method according to any one of claims 1 to 10.

24. An electronic device, wherein the electronic device is configured to perform the method according to any one of claims 1 to 10.

25. A chip, wherein the chip comprises a processor and a communications interface, the communications interface is coupled to the processor, and the processor is configured to run a program or instructions so as to implement the method according to any one of claims 1 to 10.
